# EUROPEAN PATENT SPECIFICATION

(11) **EP 4 058 339 B1**
(45) Date of publication and mention of the grant of the patent: **21.01.2026**
(21) Application number: 20798784.3
(22) Date of filing: 30.04.2020
(51) Int. Cl.: B62B 3/10, B62B 3/02, B62B 3/06

(54) **EXTENSION GATE FOR TROLLEY**
VERLÄNGERUNGSTOR FÜR TRANSPORTWAGEN
BARRIÈRE D'EXTENSION POUR CHARIOT

(30) Priority: 30.04.2019 CN 201920617757 U; 07.01.2020 CN 202010014510
(43) Date of publication of application: 21.09.2022
(73) Proprietor: Zhuhai Shichang Metals Ltd, Zhuhai City, Guangdong 519045 (CN)
(72) Inventor: YU, Hai, Zhuhai City Guangdong 519045 (CN); WANG, Che-Jen, Zhuhai City Guangdong 519045 (CN)
(74) Representative: Alier Benages, Elisabet
(86) International application number: PCT/IB2020/054089
(87) International publication number: WO 2020/222164

(56) References cited:
- CN-A- 104 309 665
- CN-A- 106 379 397
- CN-B- 104 309 665
- CN-U- 202 593 582
- CN-U- 202 593 582
- CN-U- 204 055 862
- CN-U- 210 416 620
- JP-A- 2008 126 975
- US-A- 5 476 282
- US-B1- 8 342 544
- US-B1- 9 908 548

## Description

### TECHNICAL FIELD

This present disclosure relates to trolleys and carts. More particularly, the invention relates to an improved trolley construction that features an extension gate that enables the length of the trolley to be easily adjusted, and an adjustable load stabilizer that aids in stabilizing a less than full load on the trolley.

### BACKGROUND AND SUMMARY

Trolleys or carts of the type used to store and transport folding furniture such as folding tables desire improvement.

The present disclosure relates to an improved multifunctional folding trolley.

Conventional trolleys are of fixed size, heavy, and are complicated to assemble and disassemble.

Conventional trolleys are not foldable and require substantial space for storage, unless disassembled for storage. The complication of assembly and disassembly renders this option undesirable.

US9908548 is considered the closest prior art, and discloses a trolley for carrying folded tables. It has a frame and a rotatable front gate for facilitating loading and unloading.

However, it is limited in the method of stabilisation when a reduced number of tables is loaded.

CN104309665 B and CN202593582 U teach other extensible trolleys which are also limited in the stability when not full.

In addition, conventional trolleys for use with folding tables are typically made to fit a certain size and shape table. Thus, if one has a variety of table sizes and configurations to transport, one typically must have several different trolleys.

With the development of market demand, a new type of trolley is desired, the features of which are multifunctional, easy to assemble, lightweight, and foldable so as to be easily storable without disassembly. The trolley in particular features an extension gate that enables the length of the trolley to be easily adjusted. The trolley also includes an adjustable load stabilizer that aids in stabilizing a less than full load on the trolley.

The disclosure advantageously provides improved trolley structures configured for use to carry folding tables of a variety of configurations and sizes.

In one aspect, a trolley according to the disclosure includes a loading end, a trolley frame, and an extension gate adjustably connected to the trolley frame so as to be adjustable relative to the loading end of the trolley in a length direction of the trolley. The extension gate includes an elongate member slidingly disposed on the trolley frame and a rotatable portion that is foldable relative to the elongate member and lockable in an upright position by a lock.

The rotatable portion may be positioned in an extended position from the loading end of the trolley, in a retracted position adjacent the loading end of the trolley, and in positions intermediate to the extended position and the retracted position. The elongate member may slide in a first direction to extend the rotatable portion away from the loading end of the trolley and in a second direction to retract the rotatable portion toward the loading end of the trolley.

In another aspect, a trolley according to the disclosure includes a trolley having a loading end, a trolley frame, and an adjustable load support that is removably positionable to stabilize goods loaded on the trolley when the goods do not substantially span the width of the trolley. The adjustable load support includes two spaced apart sets of receivers across the width of the trolley, and an adjustably positionable stabilizer having one end selectively positionable into the receivers of one of the sets of receivers and an opposite end selectively positionable into the receivers of the other one of the sets of receivers to vertically position the stabilizer on the trolley.

Trolleys according to the disclosure are multifunctional, foldable, and easily assembled and disassembled. Trolleys according to the disclosure have features such as an extension gate that enables the length of the trolley to be easily adjusted. Trolleys according to the disclosure also include an adjustable load stabilizer that aids in stabilizing a less than full load on the trolley.

These problems are solved by the invention as defined in the claims.

### BRIEF DESCRIPTION OF THE DRAWINGS

Further advantages of the invention are apparent by reference to the detailed description in conjunction with the figures, wherein elements are not to scale so as to more clearly show the details, wherein like reference numbers indicate like elements throughout the several views, and wherein:
FIG. 1 is a perspective view of an erected foldable multifunctional trolley according to the disclosure.
FIGS. 2 and 3 are side views of the trolley with a front adjustable extension gate thereof in a first position.
FIGS. 4 and 5 are side views showing the front adjustable extension gate in other positions.

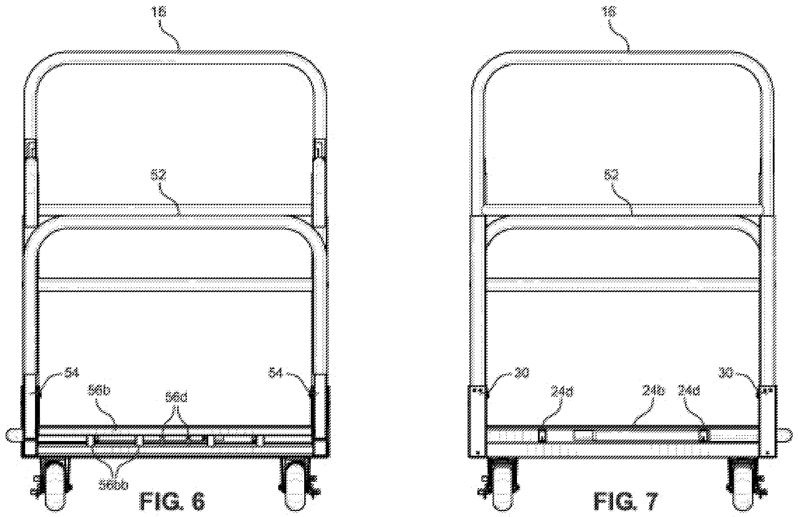

FIGS. 6 and 7 are end views of the trolley.
FIGS. 8-1 1 show positioning structures for folding components of the trolley.
FIGS. 12-14 depict the trolley configured to load round tables thereon and the loading of round tables thereon.
FIG. 15 shows the trolley with a partial load of round tables, with an adjustable load support thereof positioned to support the partial load of round tables.
FIG. 16 is a detailed view of aspects of the adjustable load support.
FIG. 17 is an exploded view of the front adjustable extension gate.
FIG. 18 is a close-up view of structure associated with a foldable handle rack component of the trolley for enabling folding of the handle rack.
FIG. 19 is a close-up view of structure of the trolley for removably connecting side rails to the handle rack.
FIG. 20 is a cross-sectional view showing a latch for latching the front adjustable extension gate at a desired amount of extension.
FIG. 21 shows the trolley loaded to carry rectangular folding tables.
FIG. 22 shows the trolley loaded to carry round folding tables.
FIG. 23 shows the trolley loaded to carry a mixture of round and rectangular tables of the various sizes.

### DETAILED DESCRIPTION

With initial reference to the drawings, the disclosure relates to a foldable multifunctional trolley 10. The appearance of the trolley 10 is also configured to be aesthetically pleasing and includes various ornamental aspects and features.

The trolley 10 includes a frame 12 supporting a floor 14, a foldable handle rack 16, side rails 18, an adjustably positionable extension gate 20, gate adjusters 22, and an adjustable load support 24. A plurality of wheels 26 are located on a bottom portion of the frame 12 to permit mobility of the trolley 10. The trolley 10 is advantageously configured to have improved structure, function and aesthetics. The components of the trolley 10 are desirably made of steel, with a powder coat finish for rust resistance.

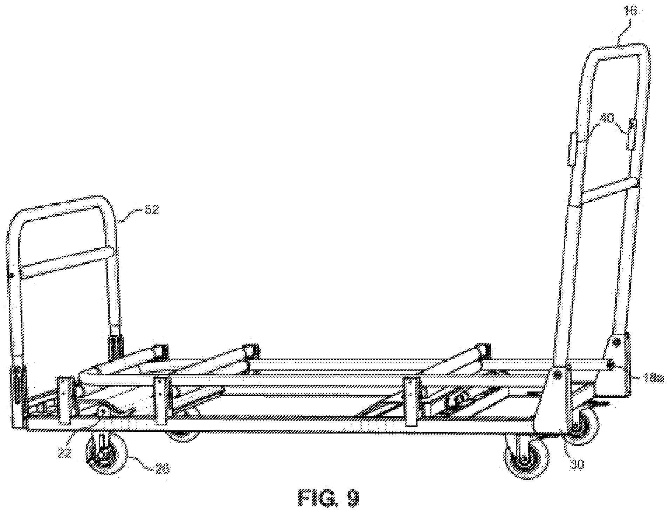

The frame 12 may be provided as by a plurality of frame members, preferably made of steel, welded or otherwise fixed together to provide the frame 12 in a rectangular or configuration. Side members 12a of the frame 12 are desirably tubular to slidingly receive the extension gate 20. The frame 12 may include floor supports that extend between the frame members for strengthening and supporting the floor 14. The frame 12 may also include rail mounts 28 for pivotally or foldably mounting the side rails 18 to the frame 12 so that the side rails may be securely maintained in an upright position for use or folded for storage (FIG. 9).

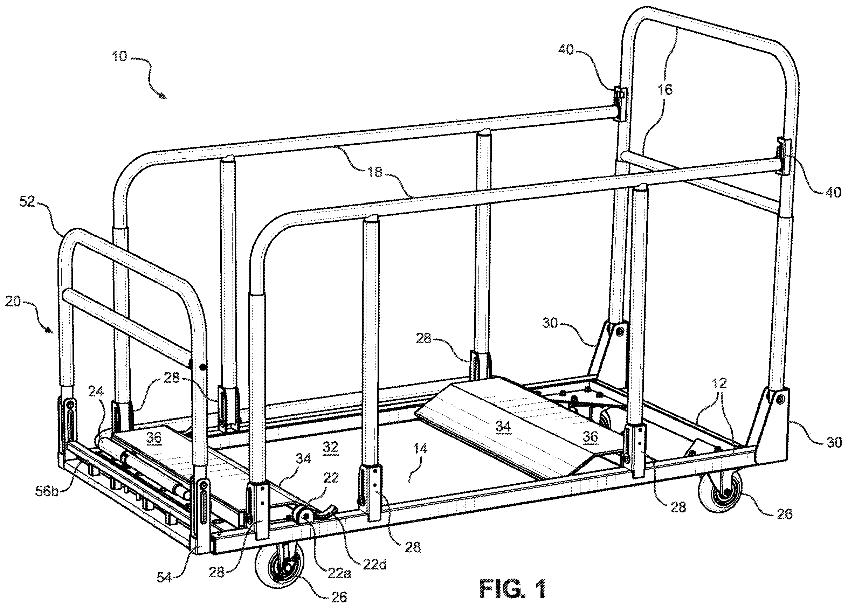

The frame 12 also includes handle mounts 30 for pivotally or foldably mounting the handle 16 to the frame 12 so that the handle 16 may be securely maintained in an upright position for use or folded for storage (FIG. 1 1). The mounts 30 are configured to prevent collapse of the handle 16 under load.

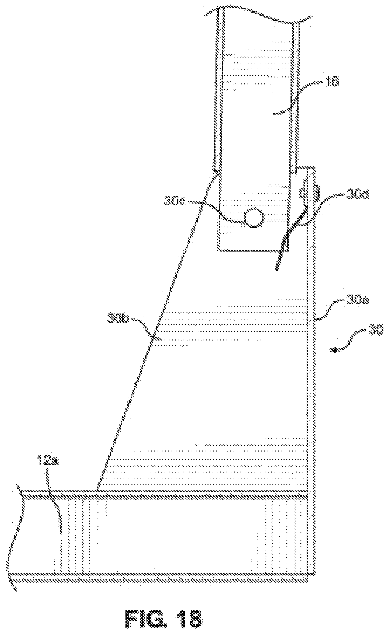

As seen in detail in FIG. 18, the handle mounts 30 include a rigid back panel 30a and a hinge panel 30b on both sides of the back panel 30a. The lower end of the handle 16 is pivotally mounted to the hinge panels 30b by hinge pin 30c. The handle mounts 30 are desirably spring-loaded and include an elastic element such as a spring 30d fixed to the mount 30 and located to bear against the handle 16 to apply a force to urge the handle 16 towards the upright position. The elastic element may be a leaf spring or other spring, or torsion springs or other the like that exert a responsive force when pressured and relax back when the pressure is removed. Thus, when force is it is exerted force onto the handle 16, the spring 30d serves to maintain the handle 16 in the upright position.

The floor 14 is located adjacent a loading end of the frame 12 and is configured to have a planar or flat central portion 32 bounded on each side by angled ramp portions 34, which terminate at elevated flat portions 36. The elevated flat portions 36 are preferably of uniform height above the flat central portion 32.

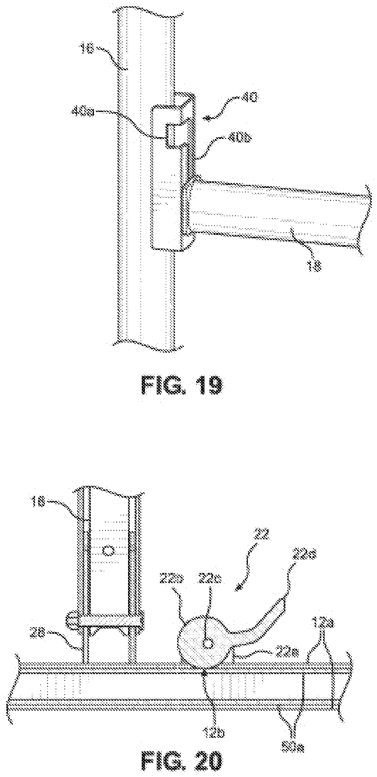

The handle rack 16 is used by a user to push the trolley 10 and is preferably of welded steel construction and is u-shaped in configuration. As previously noted, the handle 16 is pivotally or foldably mounted to the frame 12 by the handle mounts 30. To facilitate ease of assembly and disassembly, the handle rack 16 includes mounts 40 for releasably engaging and cooperating with the side rails 18 for quick connect and disconnect. With reference to FIG. 19, the mounts 40 are desirably configured with U-shaped slots 40a and 40b configured to receive correspondingly shaped latches on the rails 18a of the rails (FIG. 9).

The side rails 18 are preferably of welded steel construction. As previously noted, the side rails 18 are pivotally or foldably mounted to the frame 12 by the rail mounts 28.

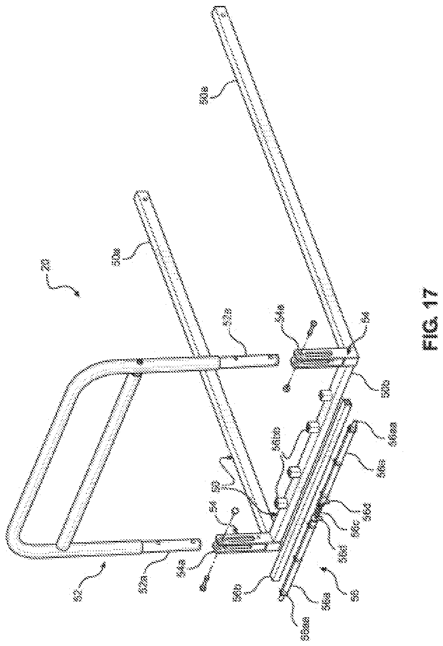

The adjustably positionable extension gate 20 is adjustably connected to the front of the frame 12 to slidingly adjust the extension of the gate 20 from the frame 12. With additional reference to FIG. 17. the extension gate 20 includes a U-shaped frame 50 having slidably positionable side members 50a and end member 50b. The side members 50a are configured to be slidingly disposed into the tubular side members 12a of the frame 12. A rotatable portion 52 is foldably mounted to the frame 50 by mounts 54 and locked in an upright position by a lock 56.

The rotatable portion 52 is u-shaped and includes lower ends 52a that pivotally engage the mounts 54. The mounts 54 may have spaced apart members 54a between which the lower ends 52a are received and pivotally mounted as by a fastener extending through aligned apertures of the mount 54 and the lower end 52a.

A lowermost portion of each of the lower ends 52a is engaged by the lock 56 to lock the rotatable portion 52 in an upright position. The lock 56 may include lateral arms 56a slidingly disposed within an enclosure 56b such that lock pins 56aa at the ends of the of the lateral arms 56a may be selectively extended and withdrawn from the ends of the enclosure 56b. The lock pins 56aa extend through aligned apertures of the lowermost portion of the mounts 54 and the lower ends 52a when the rotatable portion 52 is in the upright position. When the lock pins 56aa are withdrawn the rotatable portion 52 is unlocked and can be folded.

The arms 56a are urged apart by a spring or other bias member 56c located between the interior ends of the arms 56a within the enclosure 56b. The enclosure 56b is elevated by supports 56bb to a height so that the height of the upper surface of the enclosure 56b is no higher than the height of the elevated flat portions 36, and preferably slightly below.

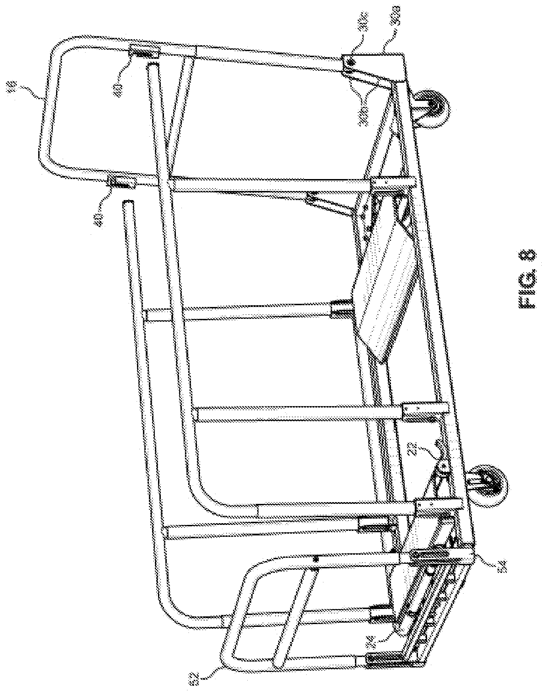

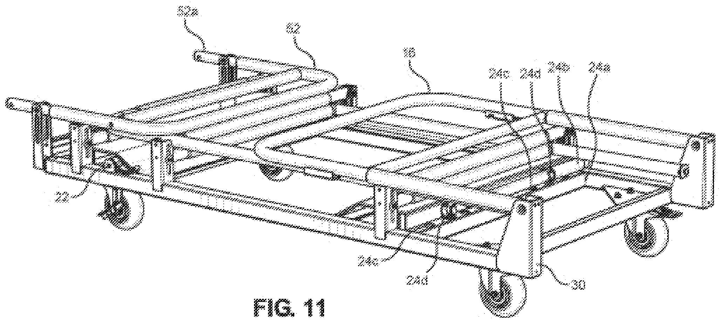

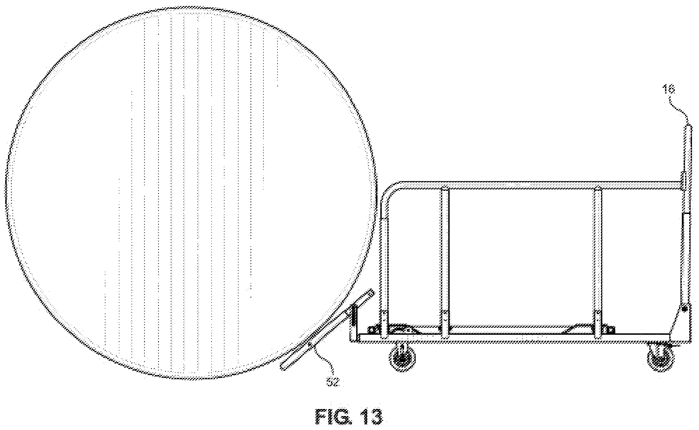

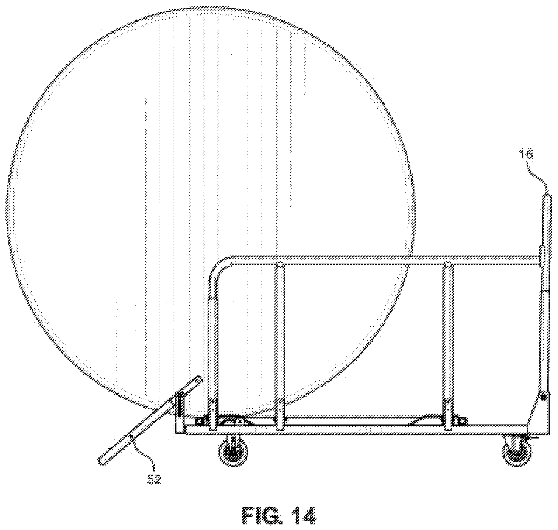

Levers 56d at the interior ends of the arms 56a extend below the enclosure 56b and may be manipulated by a user to overcome the bias of the spring 56c and urge the arms 56a toward one another to disengage the lock pins 56aa from the lower ends 52a of the rotatable portion 52 to unlock the rotatable portion 52 so that it is free to be pivoted. FIGS. 8-15 show the different orientations of the rotatable portion 52.

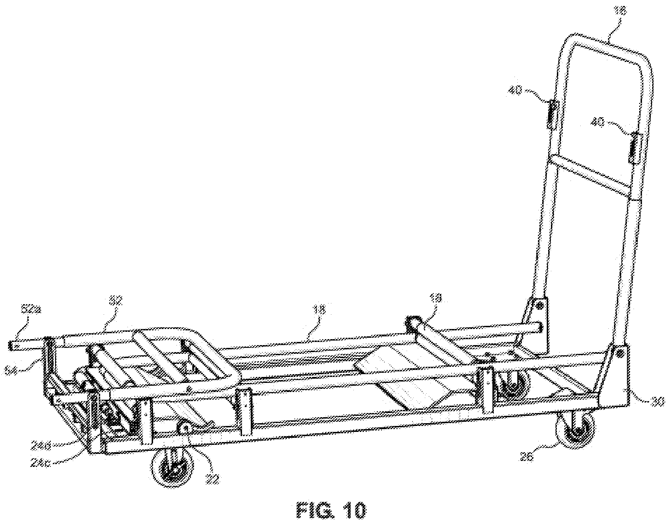

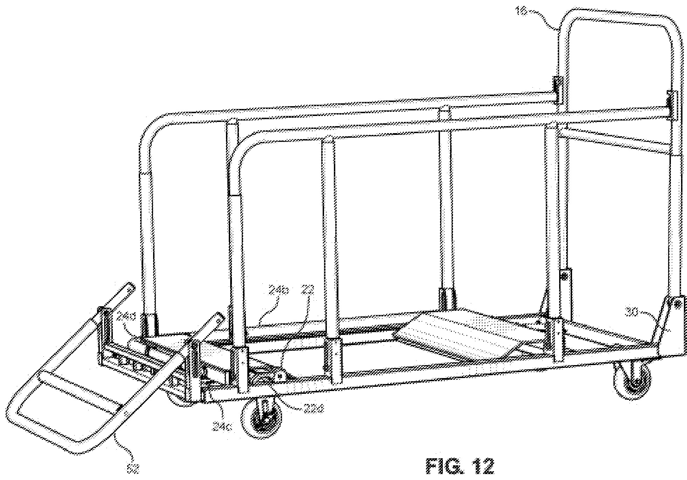

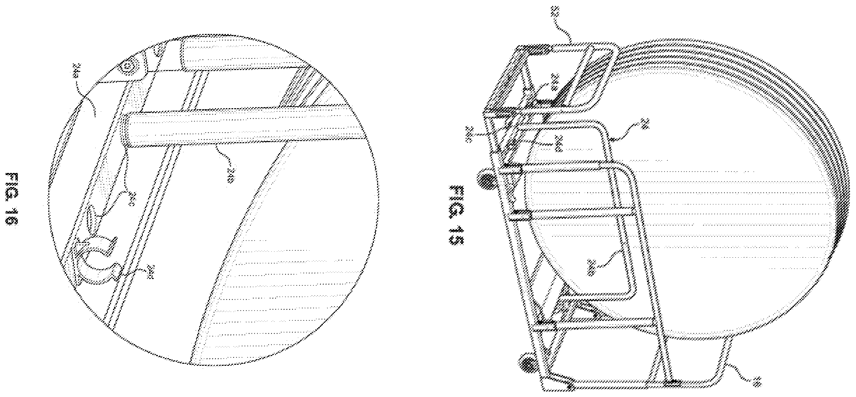

FIGS. 8-9 and 15 show the rotatable portion 52 locked in the upright position. FIGS. 10-1 1 show the rotatable portion 52 folded backward onto the trolley 10 which orientation is useful for compactness and storage of the trolley 10. FIGS. 12-14 show the rotatable portion 52 folded forward to serve as a ramp which is useful for loading and unloading round tables from the trolley 10. After the table is loaded, the rotatable portion 52 is returned to and locked in the upright position as shown in FIG. 15.

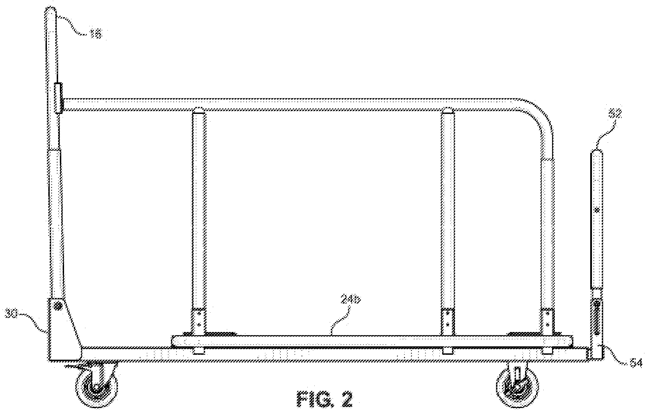

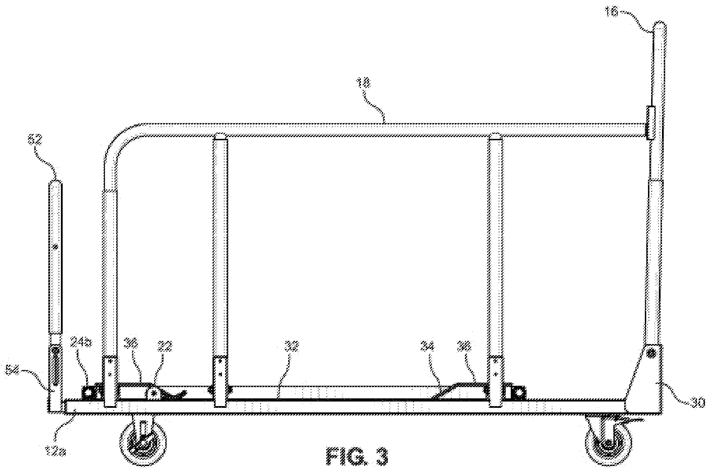

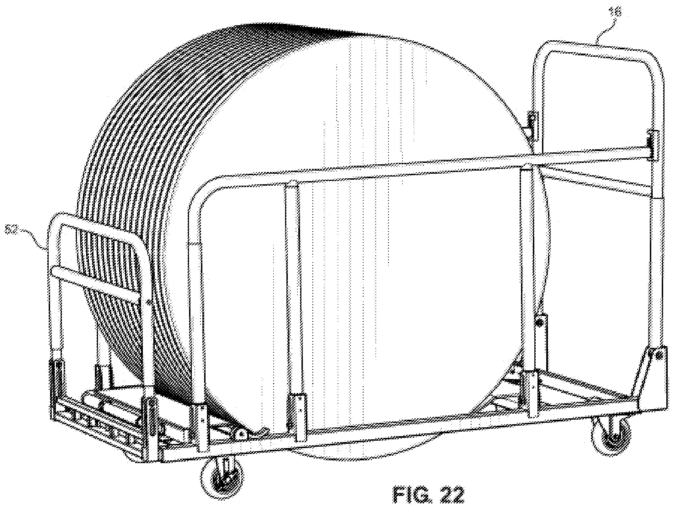

The gate adjusters 22 located on the side members 12a of the frame selectively engage the side members 50a to enable the side members 50a to be selectively locked and unlocked from movement to provide the rotatable portion 52 at a desired level of extension from the frame 12. FIGS. 1 -3 and 21 -22 for example show the rotatable portion 52 fully retracted.

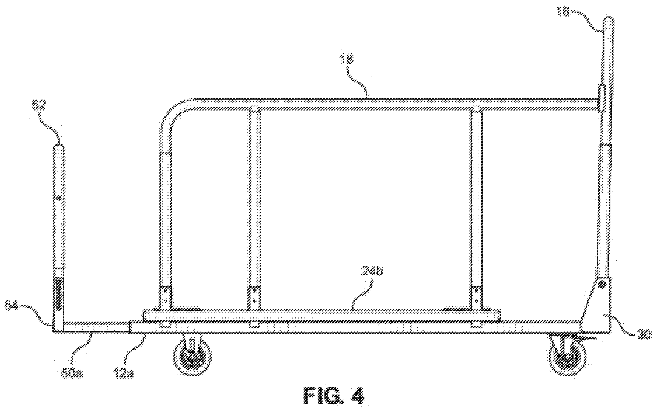

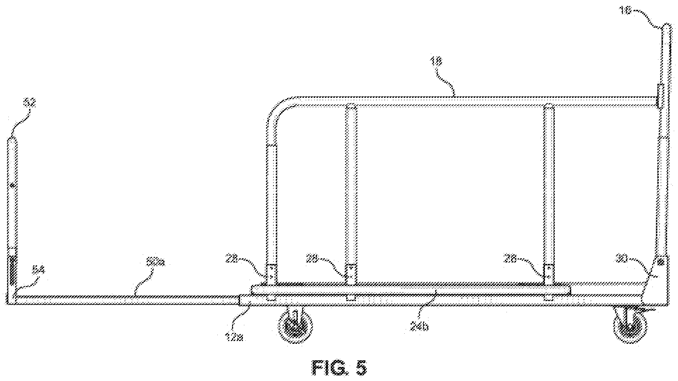

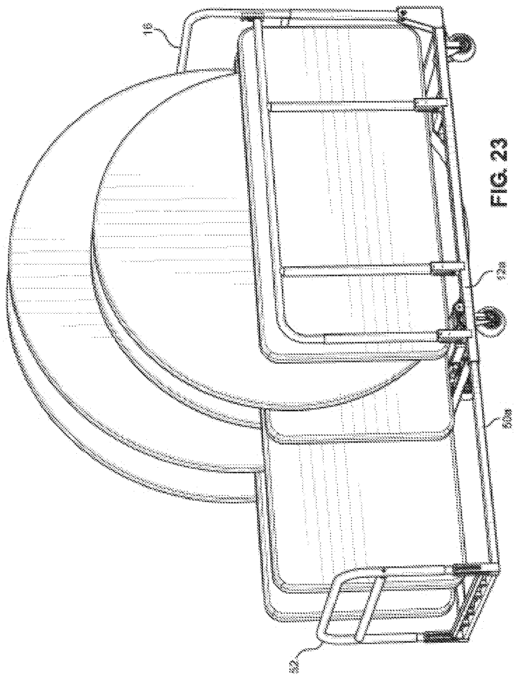

FIGS. 4 and 15 show the rotatable portion 52 partially extended, and FIGS. 5 and 23 show the rotatable portion 52 fully extended.

With additional reference to FIG. 20, the gate adjusters 22 are mounted on the side members 12a above an aperture 12b formed through the top of the side members 12 of the frame 12. The gate adjusters 22 include a pair of spaced apart sides 22a and disk 22b eccentrically mounted to the sides 22a by a fastener 22c extending through aligned apertures of the sides 22a. The disk 22b is rotated by a lever 22d connected to the disk 22b.

When the lever 22d is rearward as shown in FIGS. 1 and 20, the disk 22b, due to the eccentric mounting, is not in locking contact with the top of the side member 50a, and the side member 50 may be slidingly moved relative to the side member 12a of the frame to extend or retract the extension gate 20. When the lever 22d is forward as shown in FIGS. 12 and 23, the disk 22b, due to the eccentric mounting, extends through the aperture 12b and is in locking contact with the top of the side member 50a and it is restrained from sliding movement.

The adjustable load support 24 is provided to help stabilize tables or other goods loaded on the trolley 10 when the quantity of tables or other goods do not substantially span the width of the trolley 10. For example, as shown in FIG. 15, the quantity of tables fills up only about half of the width of the trolley 10. The load support 24 is shown positioned to hold the tables upright so that the tables do not lean.

With reference to FIGS. 10, 11, 15 and 16, the adjustable load support 24 includes a pair of cross members 24a and a load stabilizer such as a u-shaped rail 24b. The cross- members 24a are located behind the ramp portions 34 and include a plurality of uniformly spaced apart receivers such as apertures 24c and rail clips 24d each sized to receive the rails 24b. The rail 24b may be positioned for use in an upright position by placing lower leg ends of the rail 24b into the apertures 24c to adjust the lateral location of the rail 24b. Desirably the apertures 24c closest to the outer edge of the load to be carried is selected. To stow the rail 24b, the rail 24b is laid horizontally so that the legs of the rail 24b are engaged with the clips 24d.

The trolley 10 is easily assembled by installing the handle rack 16, the handle rack 16, the side rails 18, and the gate 20 onto the frame 12 by use of the cooperating mounts, which are configured for quick cooperation, and requiring no tools. Likewise, the trolley 10 may easily be disassembled by reversing the assembly.

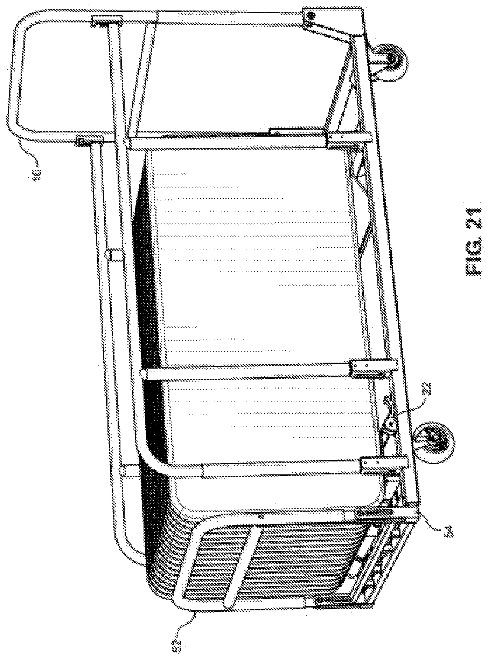

The trolley 10 is also advantageously configured to be multifunctional and adaptable to carry a variety of loads. In particular, the trolley 10 is configured for use with folding tables. Conventional trolleys for use with folding tables are typically made to fit a certain size and shape table. The trolley 10 is advantageously configured to be adaptable to carry both round and rectangular tables of a variety of sizes. For example, FIGS. 21 -23 show the trolley 10 adjustably configured to carry round and rectangular tables of a variety of sizes. As shown, the adjustable extension of the extension gate 20 enables the trolley 10 to be configured to the size of the tables or other goods being carried. Likewise, as shown in FIG. 15, the adjustable load support renders the trolley 1 0 more suitable for use with less than a full load of goods.

## Claims

1. A trolley configured for use to carry folding tables of a variety of sizes, the trolley comprising:
a loading end;
a trolley frame (12); and
an extension gate (20) adjustably connected to the trolley frame (12) so as to be adjustable relative to the loading end of the trolley in a length direction of the trolley, the extension gate (20) including:
an elongate member (50a) slidingly disposed on the trolley frame (12); and
a rotatable portion (52) foldable relative to the elongate member (50a) and lockable in an upright position by a lock, wherein the rotatable portion (52) is adapted to be positioned in an extended position from the loading end of the trolley, in a retracted position adjacent the loading end of the trolley, and in positions intermediate to the extended position and the retracted position,
wherein the elongate member (50a) is adapted to slide in a first direction to extend the rotatable portion (52) away from the loading end of the trolley and in a second direction to retract the rotatable portion (52) toward the loading end of the trolley and in that it comprises an adjustable load support (24) removably positionable to stabilize goods loaded on the trolley when the goods do not substantially span a width of the trolley, the adjustable load support comprising:
a pair of cross members (24a) mounted across the width of the trolley and spaced apart from one another, each cross member (24a) having a plurality of receivers (24c); and
an adjustably positionable stabilizer (24b) having one end selectively positionable into the receivers of one of the cross members (24a) and an opposite end selectively positionable into the receivers of the other one of the cross members (24a) to vertically position the stabilizer on the trolley.

2. The trolley of claim 1, wherein the trolley frame (12) includes a tubular side member (12a) and the elongate member (50a) of the extension gate (20) is slidingly received by the tubular side member (12a).

3. The trolley of claim 2, further comprising a gate adjuster mounted on the tubular side member (12a) by a mount adjacent an aperture formed through the tubular side member (12a), the gate adjuster having a cam rotatably and eccentrically mounted to the mount, wherein the cam is rotatable to a first orientation to extend through the aperture and be in locking contact with the elongate member (50a) and is rotatable to a second orientation to not be in locking contact with the elongate member (50a).

4. The trolley of claim 1 , wherein the trolley includes a floor having a planar central portion bounded on each side by angled ramp portions (34) which terminate at elevated flat portions (36).

5. The trolley of claim 1 , wherein the trolley frame (12) includes a pair of tubular side members (12a) and the extension gate (20) includes a pair of elongate members (50a), each slidingly received by one of the tubular side members (12a).

6. The trolley of claim 5, wherein the rotatable portion includes depending legs and the extension gate (20) includes gate mounts located on the elongate members (50a) to which the depending legs of the rotatable portion (52) are pivotally mounted.

7. The trolley of claim 6, wherein the lock (56) comprises a pair of lateral arms (56a) aligned end to end, wherein the lateral arms (56a) may be extended away from one another to lockingly engage the depending legs of the rotatable portion (52) to lock the rotatable portion (52) in the upright position and retracted toward one another out of engagement with the depending legs to unlock the rotatable portion (52).

8. The trolley of claim 7, wherein the lateral arms (56a) include lock pins (56aa) at their distal ends and the depending legs include passages which receive the lock pins (56aa) when the lateral arms (56a) are lockingly engaged with the depending legs.

9. The trolley of claim 8, wherein the mounts include passages through which the lock pins (56aa) of the lateral arms (56a) pass when the lateral arms (56a) are lockingly engaged with the depending legs.

10. The trolley of claim 9, further comprising a bias member (56c) located between the lateral arms (56a) and configured to urge the lateral arms (56a) away from one another.

11. The trolley of claim 10, further comprising levers located on the lateral arms (56a) which may be manipulated by a user to overcome the bias member (56c) and urge the lateral arms (56a) toward one another.

12. The trolley of claim 11, further comprising an enclosure located to enclose the lateral arms (56a) and out of which the lock pins (56aa) extend when the lateral arms (56a) are lockingly engaged with the depending legs.

13. The trolley of claim 12, wherein the trolley includes a floor having a planar central portion bounded on each side by angled ramp portions (34) which terminate at elevated flat portions (36), wherein the enclosure has an upper surface that is at a height at or below the elevated flat portions (36).

## Patentansprüche

1. Transportwagen, der zur Verwendung zum Tragen von Klapptischen verschiedener Größen konfiguriert ist, wobei der Transportwagen Folgendes umfasst:
ein Ladeende; einen Transportwagenrahmen (12); und
ein Verlängerungstor (20), das mit dem Transportwagenrahmen (12) verstellbar verbunden ist, sodass es relativ zu dem Ladeende des Transportwagens in einer Längsrichtung des Transportwagens verstellbar ist, wobei das Verlängerungstor (20) Folgendes beinhaltet:
ein längliches Element (50a), das gleitend auf dem Transportwagenrahmen (12) angeordnet ist; und
einen drehbaren Abschnitt (52), der relativ zu dem länglichen Element (50a) klappbar und durch eine Verriegelung in einer aufrechten Position arretierbar ist, wobei der drehbare Abschnitt (52) angepasst ist, in einer ausgefahrenen Position von dem Ladeende des Transportwagens, in einer eingefahrenen Position neben dem Ladeende des Transportwagens und in Positionen zwischen der ausgefahrenen Position und der eingefahrenen Position positioniert zu werden,
wobei das längliche Element (50a) angepasst ist, um in einer ersten Richtung zu gleiten, um den drehbaren Abschnitt (52) von dem Ladeende des Transportwagens weg auszufahren, und in einer zweiten Richtung, um den drehbaren Abschnitt (52) zu dem Ladeende des Transportwagens hin zurückzuziehen, und dadurch, dass es eine einstellbare Laststütze (24) umfasst, die entfernbar positionierbar ist, um auf dem Transportwagen geladene Güter zu stabilisieren, wenn die Güter nicht im Wesentlichen eine Breite des Transportwagens überspannen, wobei die einstellbare Laststütze Folgendes umfasst:
ein Paar Querelemente (24a), die über die Breite des Transportwagens angebracht und voneinander beabstandet sind, wobei jeder Querträger (24a) eine Vielzahl von Aufnahmen (24c) aufweist;
einen einstellbar positionierbaren Stabilisator (24b), dessen eines Ende in die Aufnahmen eines der Querelemente (24a) selektiv positionierbar ist und dessen gegenüberliegendes Ende in die Aufnahmen des anderen der Querelemente (24a) selektiv positionierbar ist, um den Stabilisator vertikal auf dem Wagen zu positionieren.

2. Transportwagen nach Anspruch 1, wobei der Transportwagenrahmen (12) ein rohrförmiges Seitenelement (12a) beinhaltet und das längliche Element (50a) des Verlängerungstors (20) gleitend von dem rohrförmigen Seitenelement (12a) aufgenommen wird.

3. Transportwagen nach Anspruch 2, ferner umfassend einen Toreinsteller, der an dem röhrenförmigen Seitenelement (12a) durch eine Halterung angrenzend an eine durch das röhrenförmige Seitenelement (12a) gebildete Öffnung angebracht ist, wobei der Toreinsteller einen Nocken aufweist, der drehbar und exzentrisch an der Halterung angebracht ist, wobei der Nocken in eine erste Ausrichtung drehbar ist, um sich durch die Öffnung zu erstrecken und in Verriegelungskontakt mit dem länglichen Element (50a) zu sein, und in eine zweite Ausrichtung drehbar ist, um nicht in Verriegelungskontakt mit dem länglichen Element (50a) zu sein.

4. Transportwagen nach Anspruch 1, wobei der Transportwagen einen Boden mit einem ebenen mittleren Abschnitt beinhaltet, der auf jeder Seite durch abgewinkelte Rampenabschnitte (34) begrenzt ist, die in erhöhten flachen Abschnitten (36) enden.

5. Transportwagen nach Anspruch 1, wobei der Wagenrahmen (12) ein Paar rohrförmiger Seitenelemente (12a) umfasst und das Verlängerungstor (20) ein Paar länglicher Elemente (50a) umfasst, die jeweils gleitend von einem der rohrförmigen Seitenelemente (12a) aufgenommen werden.

6. Transportwagen nach Anspruch 5, wobei der drehbare Abschnitt herabhängende Schenkel umfasst und das Verlängerungstor (20) Torhalterungen beinhaltet, die sich an den länglichen Elementen (50a) befinden, an denen die herabhängenden Schenkel des drehbaren Abschnitts (52) schwenkbar angebracht sind.

7. Transportwagen nach Anspruch 6, wobei die Verriegelung (56) ein Paar seitlicher Arme (56a) umfasst, die Ende an Ende ausgerichtet sind, wobei die seitlichen Arme (56a) voneinander weg ausgefahren werden können, um in die herabhängenden Schenkel des drehbaren Abschnitts (52) einzugreifen und den drehbaren Abschnitt (52) in der aufrechten Position zu verriegeln, und zueinander zurückgezogen werden können, um aus dem Eingriff mit den herabhängenden Schenkeln zu kommen und den drehbaren Abschnitt (52) zu entriegeln.

8. Transportwagen nach Anspruch 7, wobei die seitlichen Arme (56a) an ihren distalen Enden Verriegelungsstifte (56aa) beinhalten und die herabhängenden Schenkel Durchgänge beinhalten, die die Verriegelungsstifte (56aa) aufnehmen, wenn die seitlichen Arme (56a) mit den herabhängenden Schenkeln verriegelt sind.

9. Transportwagen nach Anspruch 8, wobei die Halterungen Durchgänge beinhalten, durch die die Verriegelungsstifte (56aa) der seitlichen Arme (56a) hindurchgehen, wenn die seitlichen Arme (56a) mit den herabhängenden Schenkeln verriegelnd in Eingriff stehen.

10. Transportwagen nach Anspruch 9, ferner umfassend ein Vorspannelement (56c), das sich zwischen den seitlichen Armen (56a) befindet und konfiguriert ist, um die seitlichen Arme (56a) voneinander wegzudrücken.

11. Transportwagen nach Anspruch 10, ferner umfassend Hebel, die sich an den seitlichen Armen (56a) befinden und von einem Benutzer bedient werden können, um das Vorspannelement (56c) zu überwinden und die seitlichen Arme (56a) zueinander zu drücken.

12. Transportwagen nach Anspruch 11, ferner umfassend ein Gehäuse, das sich so befindet, dass sie die seitlichen Arme (56a) umschließt, und aus der sich die Verriegelungsstifte (56aa) erstrecken, wenn die seitlichen Arme (56a) mit den herabhängenden Schenkeln verriegelnd in Eingriff stehen.

13. Transportwagen nach Anspruch 12, wobei der Transportwagen einen Boden mit einem ebenen mittleren Abschnitt beinhaltet, der auf jeder Seite durch abgewinkelte Rampenabschnitte (34) begrenzt ist, die in erhöhten flachen Abschnitten (36) enden, wobei das Gehäuse eine obere Oberfläche aufweist, die sich auf einer Höhe befindet, die auf oder unterhalb der erhöhten ebenen Abschnitte (36) liegt.

## Revendications

1. Chariot conçu pour être utilisé pour transporter des tables pliantes de différentes tailles, le chariot comprenant :
une extrémité de chargement ; un cadre de chariot (12) ; et
une barrière d'extension (20) reliée de manière réglable au cadre du chariot (12) de sorte à pouvoir être réglée par rapport à l'extrémité de chargement du chariot dans le sens de la longueur du chariot, la barrière d'extension (20) comportant :
un élément allongé (50a) disposé de manière coulissante sur le cadre de chariot (12) ; et
une partie rotative (52) pliable par rapport à l'élément allongé (50a) et verrouillable en position verticale par une serrure, dans lequel la partie rotative (52) est adaptée pour être positionnée dans une position étendue à partir de l'extrémité de chargement du chariot, dans une position rétractée adjacente à l'extrémité de chargement du chariot, et dans des positions intermédiaires entre la position étendue et la position rétractée,
dans lequel l'élément allongé (50a) est adapté pour coulisser dans un premier sens afin d'étendre la partie rotative (52) à l'écart de l'extrémité de chargement du chariot et dans un second sens pour rétracter la partie rotative (52) vers l'extrémité de chargement du chariot et en ce qu'il comprend un support de charge réglable (24) à positionnement amovible pour stabiliser les marchandises chargées sur le chariot lorsque les marchandises ne couvrent pas substantiellement la largeur du chariot, le support de charge réglable comprenant :
une paire de traverses (24a) montées sur toute la largeur du chariot et espacées l'une de l'autre, chaque traverse (24a) ayant une pluralité de récepteurs (24c) ;
un stabilisateur (24b) à positionnement réglable ayant une extrémité à positionnement sélectif dans les récepteurs de l'une des traverses (24a) et une extrémité opposée à positionnement sélectif dans les récepteurs de l'autre des traverses (24a) afin de positionner verticalement le stabilisateur sur le chariot.

2. Chariot selon la revendication 1, dans lequel le cadre de chariot (12) comporte un élément latéral tubulaire (12a) et l'élément allongé (50a) de la barrière d'extension (20) est reçu de manière coulissante par l'élément latéral tubulaire (12a).

3. Chariot selon la revendication 2, comprenant en outre un dispositif de réglage de barrière monté sur l'élément latéral tubulaire (12a) par une fixation adjacente à une ouverture formée à travers l'élément latéral tubulaire (12a), le dispositif de réglage de barrière ayant une came montée de manière rotative et excentrique sur la fixation, dans lequel la came peut entrer en rotation vers une première orientation pour s'étendre à travers l'ouverture et être en contact de verrouillage avec l'élément allongé (50a) et peut entrer en rotation vers une seconde orientation pour ne pas être en contact de verrouillage avec l'élément allongé (50a).

4. Chariot selon la revendication 1, dans lequel le chariot comporte un plancher ayant une partie centrale plane délimitée de chaque côté par des parties en rampe angulaires (34) qui se terminent par des parties plates surélevées (36).

5. Chariot selon la revendication 1, dans lequel le cadre du chariot (12) comporte une paire d'éléments latéraux tubulaires (12a) et la barrière d'extension (20) comporte une paire d'éléments allongés (50a), chacun étant reçu de manière coulissante par l'un des éléments latéraux tubulaires (12a).

6. Chariot selon la revendication 5, dans lequel la partie rotative comporte des pattes pendantes et la barrière d'extension (20) comporte des fixations de barrière situées sur les éléments allongés (50a) auxquels les pattes pendantes de la partie rotative (52) sont montées de manière pivotante.

7. Chariot selon la revendication 6, dans lequel le verrou (56) comprend une paire de bras latéraux (56a) alignés bout à bout, dans lequel les bras latéraux (56a) peuvent s'étendre à l'écart 'écartant l'un de l'autre pour venir s'engager de manière verrouillée avec les pattes pendantes de la partie rotative (52) afin de verrouiller la partie rotative (52) en position verticale et se rétracter l'un vers l'autre pour se désengager des pattes pendantes afin de déverrouiller la partie rotative (52).

8. Chariot selon la revendication 7, dans lequel les bras latéraux (56a) comportent des goupilles de verrouillage (56aa) à leurs extrémités distales et les pattes pendantes comportent des passages qui reçoivent les goupilles de verrouillage (56aa) lorsque les bras latéraux (56a) sont engagés de manière verrouillée avec les pattes pendantes.

9. Chariot selon la revendication 8, dans lequel les fixations comportent des passages à travers lesquels les goupilles de verrouillage (56aa) des bras latéraux (56a) passent lorsque les bras latéraux (56a) sont engagés de manière verrouillée avec les pattes pendantes.

10. Chariot selon la revendication 9, comprenant en outre un élément de sollicitation (56c) situé entre les bras latéraux (56a) et conçu pour pousser les bras latéraux (56a) l'un à l'écart de l'autre.

11. Chariot selon la revendication 10, comprenant en outre des leviers situés sur les bras latéraux (56a) qui peuvent être manipulés par un utilisateur pour surmonter l'élément de sollicitation (56c) et pousser les bras latéraux (56a) l'un vers l'autre.

12. Chariot selon la revendication 11, comprenant en outre un carter situé pour entourer les bras latéraux (56a) et duquel se déploient les goupilles de verrouillage (56aa) lorsque les bras latéraux (56a) sont engagés de manière verrouillée avec les pattes pendantes.

13. Chariot selon la revendication 12, dans lequel le chariot comporte un plancher ayant une partie centrale plane délimitée de chaque côté par des parties en rampe angulaires (34) qui se terminent par des parties plates surélevées (36), dans lequel le carter a une surface supérieure qui se trouve à une hauteur égale ou inférieure aux parties plates surélevées (36).
